# EUROPEAN PATENT SPECIFICATION

(11) **EP 1 659 864 B1**
(45) Date of publication and mention of the grant of the patent: **18.09.2013**
(21) Application number: 04763247.6
(22) Date of filing: 15.07.2004
(51) Int. Cl.: A01N 43/40, A01N 47/24, A01P 21/00

(54) **METHOD OF PLANT GROWTH PROMOTION USING AMIDE COMPOUNDS**
VERFAHREN ZUR FÖRDERUNG DES PFLANZENWACHSTUMS MIT HILFE VON AMIDVERBINDUNGEN
PROCEDE DE PROMOTION DE LA CROISSANCE VEGETALE FAISANT APPEL A DES COMPOSES AMIDE

(30) Priority: 26.08.2003 US 497717 P
(43) Date of publication of application: 31.05.2006
(73) Proprietor: BASF SE, 67056 Ludwigshafen (DE)
(72) Inventor: BUBERL, Jan, Research Triangle, NC 27709 (US); BROSCIOUS, Steven, Research Triangle, NC 27709 (US); YPEMA, Hendrik, Cary,NC 27519 (US); MILLHOUSE, David, Dinuba, CA 93618 (US); HELM, John, Sanger, CA 93657 (US); BURKDOLL, Todd, Visalia, CA 93291 (US)
(86) International application number: PCT/EP2004/007872
(87) International publication number: WO 2005/018324

(56) References cited:
- EP-A- 0 589 301
- WO-A-97/08952
- WO-A-97/10716
- WO-A-03/029219
- WO-A-03/029219
- WO-A2-99/63813
- US-A- 3 725 427
- TAKANE HARA ET AL.: "Flower induction in Asparagus Seedlings by Anilide and Benzamide" J. AGRIC. FOOD CHEM., vol. 40, 1992, pages 1692-1694, XP002305634
- JABS T ET AL: "ANTI-OXIDATIVE AND ANTI-SENESCENCE EFFECTS OF THE STROBILURIN PYRACLOSTROBIN IN PLANTS: A NEW STRATEGY TO COPE WITH ENVIRONMENTAL STRESS IN CEREALS", BRIGHTON CROP PROTECTION CONFERENCE PESTS AND DISEASES, XX, XX, vol. 2, 1 January 2002 (2002-01-01), pages 941-946, XP008044011, ISSN: 0955-1506

## Description

The present invention relates to a new method of plant treatment that is able to induce positive growth regulating responses.

The term "method for regulating plant growth" or the term "growth regulation process" or the use of the words "growth regulation" or other terms using the word "regulate" as used in the instant specification mean a variety of plant responses which attempt to improve some characteristic of the plant as distinguished from pesticidal action, the intention of which is to destroy or stunt a growth of a plant or a living being. For this reason the compounds used in the practice of this invention are used in amounts which are non-phytotoxic with respect to the plant being treated.

More precisely, the present invention relates to the use of certain amide compounds, in particular nicotinamide compounds in order to induce growth-regulating responses.

EP-A 0545099 describes amide derivatives and their use to combat Botrytis. Nothing is disclosed with regard to a plant growth promotion effect.

It is an object of the present invention to provide a method of plant growth in order to obtain better plants, higher crop yield, better crop quality and better conditions of agricultural practices.

We have found that this object is achieved by a method for treating plants in need of growth promotion, comprising applying to said plants, to the seeds from which they grow or to the locus in which they grow, a non-phytotoxic, effective plant growth promoting amount of an amide compound having the formula I 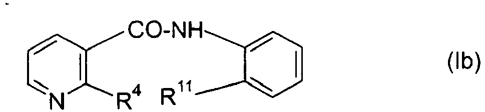 in which
- R⁴: is halogen and
- R¹¹: is phenyl which is substituted by halogen;
wherein the plant growth promoting amount of the amide compound of formula (Ib) applied is sufficient to provide at least one plant growth promoting effect selected from the group consisting of:
- a): bigger fruit size
- b): bigger vegetable size
- c): higher sugar concentration of fruits
- d): more developed root system
- e): higher crop firmness
- f): longer storability
- g): improved appearance
- h): better fruit finish
- i): earlier fruit maturation
- j): increase in plant height
- k): bigger leaf blade
- l): less dead basal leaves
- m): greener leaf color
- n): earlier flowering
- o): increased shoot growth
- p): improved plant vigour
- q): early germination.

In the context of the present invention, halogen is fluorine, chlorine, bromine and iodine and is in particular fluorine, chlorine and bromine.

According to the invention, the compositions comprise as amide compound a compound of the formula Ib 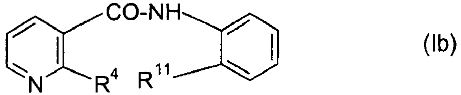 in which
- R⁴: is halogen and
- R¹¹: is phenyl which is substituted by halogen.

Preferred are in particular the two amide compounds of the following formula A fungicidal mixture as claimed in claim 1, which comprises as amide compound a compound of the formulae below:

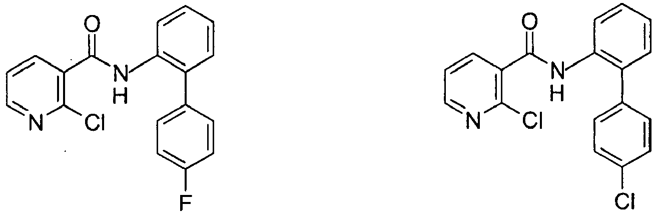

Most preferred is 2-chloro-N-(4-chlorobiphenyl-2-yl) nicotinamide with the common name boscalid.

The preparation of the amide compounds of the formula Ib is known, for example, from EP-A-545 099 or 589 301 or can be carried out by similar processes.

The amide compounds used in the method of the present invention have been found to display a wide variety of plant growth regulating properties, depending upon the concentration used, the formulation employed and the type of plant species treated.

By virtue of the practice of the present invention a wide variety of plant growth responses, including the following:
- a): bigger fruit size
- b): bigger vegetable size
- c): higher sugar concentration of fruits
- d): more developed root system
- e): higher crop firmness
- f): longer storability
- g): improved appearance
- h): better fruit finish
- i): earlier fruit maturation
- j): increase in plant height
- k): bigger leaf blade
- l): less dead basal leaves
- m): greener leaf color
- n): earlier flowering
- o): increased shoot growth
- p): improved plant vigour
- q): early germination.

It is intended that as used in the instant specification the term "method for regulating plant growth" means the achievement of at least one of the aforementioned 17 categories of response and optionally any other modification of plant, seed, fruit, vegetable, whether the fruit or vegetable is un-harvested or has been harvested, so long as the net result is to increase growth and quality or benefit any property of the plant, seed, fruit or vegetable as distinguished from any pesticidal action. The term "fruit" as used in the instant specification is to be understood as meaning anything of economic value that is produced by the plant.

Certain preliminary details connected with the foregoing 17 categories should make for a better appreciation of the invention.

Description of possible formulations may be found in patent applications EP-A-545 099 and EP-A-589 301.

The application rates of the compounds I are from 0.005 to 0.5 kg/ha, preferably 0.01 to 0.2 kg/ha, in particular 0.02 to 0.1 kg/ha.

For seed treatment, the application rates of the mixture are generally from 0.001 to 250 g/kg of seed, preferably 0.01 to 100 g/kg, in particular 0.01 to 50 g/kg.

The amide compounds I, can be formulated for example in the form of ready-to-spray solutions, powders and suspensions or in the form of highly concentrated aqueous, oily or other suspensions, dispersions, emulsions, oil dispersions, pastes, dusts, materials for broadcasting or granules, and applied by spraying, atomizing, dusting, broadcasting or watering. The use form depends on the intended purpose; in any case, it should ensure as fine and uniform as possible a distribution of the mixture according to the invention.

The formulations are prepared in a known manner, e.g. by extending the active ingredient with solvents and/or carriers, if desired using emulsifiers and dispersants, it being possible also to use other organic solvents as auxiliary solvents if water is used as the diluent. Suitable auxiliaries for this purpose are essentially: solvents such as aromatics (e.g. xylene), chlorinated aromatics (e.g. chlorobenzenes), paraffins (e.g. mineral oil fractions), alcohols (e.g. methanol, butanol), ketones (e.g. cyclohexanone), amines (e.g. ethanolamine, dimethylformamide) and water; carriers such as ground natural minerals (e.g. kaolins, clays, talc, chalk) and ground synthetic minerals (e.g. finely divided silica, silicates); emulsifiers such as nonionic and anionic emulsifiers (e.g. polyoxyethylene fatty alcohol ethers, alkylsulfonates and arylsulfonates) and dispersants such as lignosulfite waste liquors and methylcellulose.

Suitable surfactants are the alkali metal salts, alkaline earth metal salts and ammonium salts of aromatic sulfonic acids, e.g. ligno-, phenol-, naphthalene- and dibutylnaphthalenesulfonic acid, and of fatty acids, alkyl- and alkylarylsulfonates, alkyl, lauryl ether and fatty alcohol sulfates, and salts of sulfated hexa-, hepta- and octadecanols, or of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenol polyglycol ethers, tributylphenyl polyglycol ethers, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors or methylcellulose.

Powders, materials for broadcasting and dusts can be prepared by mixing or jointly grinding the amide compounds I with a solid carrier.

Granules (e.g. coated granules, impregnated granules or homogeneous granules) are usually prepared by binding the active ingredient, or active ingredients, to a solid carrier.

Fillers or solid carriers are, for example, mineral earths, such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials and fertilizers, such as ammonium sulfate, ammonium phosphate, ammonium nitrate, ureas, and products of vegetable origin, such as cereal meal, tree bark meal, wood meal and nutshell meal, cellulose powders or other solid carriers.

The formulations generally comprise from 0.1 to 95% by weight, preferably 0.5 to 90% by weight, of the compound. The active ingredients are employed in a purity of from 90% to 100%, preferably 95% to 100% (according to NMR spectrum or HPLC).

Examples of such preparations comprising the active ingredients are:
- I.: A solution of 90 parts by weight of the active ingredients and 10 parts by weight of N-methylpyrrolidone; this solution is suitable for use in the form of microdrops;
- II.: A mixture of 20 parts by weight of the active ingredients, 80 parts by weight of xylene, 10 parts by weight of the adduct of 8 to 10 mol of ethylene oxide and 1 mol of oleic acid N-monoethanolamide, 5 parts by weight of the calcium salt of dodecylbenzenesulfonic acid, 5 parts by weight of the adduct of 40 mol of ethylene oxide and 1 mol of castor oil; a dispersion is obtained by finely distributing the solution in water;
- III.: An aqueous dispersion of 20 parts by weight of the active ingredients, 40 parts by weight of cyclohexanone, 30 parts by weight of isobutanol, 20 parts by weight of the adduct of 40 mol of ethylene oxide and 1 mol of castor oil;
- IV.: An aqueous dispersion of 20 parts by weight of the active ingredients, 25 parts by weight of cyclohexanol, 65 parts by weight of a mineral oil fraction of boiling point 210 to 280°C, and 10 parts by weight of the adduct of 40 mol of ethylene oxide and 1 mol of castor oil;
- V.: A mixture, ground in a hammer mill, of 80 parts by weight of the active ingredients, 3 parts by weight of the sodium salt of diisobutylnaphthalene-1-sulfonic acid, 10 parts by weight of the sodium salt of a lignosulfonic acid from a sulfite waste liquor and 7 parts by weight of pulverulent silica gel; a spray mixture is obtained by finely distributing the mixture in water;
- VI.: An intimate mixture of 3 parts by weight of the active ingredients and 97 parts by weight of finely divided kaolin; this dust comprises 3% by weight of active ingredient;
- VII.: An intimate mixture of 30 parts by weight of the active ingredients, 92 parts by weight of pulverulent silica gel and 8 parts by weight of paraffin oil which had been sprayed onto the surface of this silica gel; this formulation imparts good adhesion to the active ingredient;
- VIII.: A stable aqueous dispersion of 40 parts by weight of the active ingredients, 10 parts by weight of the sodium salt of a phenolsulfonic acid/urea/formaldehyde condensate, 2 parts by weight of silica gel and 48 parts by weight of water; this dispersion may be diluted further; IX. A stable oily dispersion of 20 parts by weight of the active ingredients, 2 parts by weight of the calcium salt of dodecylbenzenesulfonic acid, 8 parts by weight of fatty alcohol polyglycol ether, 20 parts by weight of the sodium salt of a phenolsulfonic acid/urea/formaldehyde condensate and 88 parts by weight of a paraffinic mineral oil.

The amide compounds according to the invention may also be present in combination with other active compounds, for example with herbicides, insecticides, growth regulators, fungicides or else with fertilizers. In many cases, a mixture of the amide compounds I, or of the compositions comprising them, in the use form as growth promotors with other active compounds results in a broader spectrum of activity.

The following list of fungicides in combination with which the amide compounds according to the invention can be used is intended to illustrate the possible combinations, but not to impose any limitation:
- sulfur, dithiocarbamates and their derivatives, such as iron(III) dimethyldithiocarbamate; zinc dimethyldithiocarbamate, zinc ethylenebisdithiocarbamate, manganese ethylenebisdithiocarbamate, manganese zinc ethylenediaminebisdithiocarbamate, tetramethylthiuram disulfide, ammonia complex of zinc (N,N-ethylenebisdithiocarbamate), ammonia complex of zinc (N,N'-propylenebisdithiocarbamate), zinc (N,N'-propylenebisdithiocarbamate), N,N'-polypropylenebis(thiocarbamoyl)disulfide;
- nitro derivatives, such as dinitro-(1-methylheptyl)phenyl crotonate, 2-sec-butyl-4,6-dinitrophenyl-3,3-dimethyl acrylate, 2-sec-butyl-4,6-dinitrophenylisopropyl carbonate, diisopropyl 5-nitroisophthalate;
- heterocyclic substances, such as 2-heptadecyl-2-imidazoline acetate, 2,4-dichloro-6-(o-chloroanilino)-s-triazine, O,O-diethyl phthalimidophosphonothioate, 5-amino-1-[bis(dimethylamino)phosphinyl]-3-phenyl-1,2,4-triazole, 2,3-dicyano-1,4-dithioanthraquinone, 2-thio-1,3-dithiolo[4,5-b]quinoxaline, methyl 1-(butyl-carbamoyl)-2-benzimidazolecarbamate, 2-methoxycarbonylaminobenzimidazole, 2-(furyl-(2))benzimidazole, 2-(thiazolyl-(4))benzimidazole, N-(1,1,2,2-tetrachloroethylthio)tetrahydrophthalimide, N-trichloromethylthiotetrahydrophthalimide, N-trichloromethylthiophthalimide;
- N-dichlorofluoromethylthio-N',N'-dimethyl-N-phenylsulfuric diamide, 5-ethoxy-3-trichloromethyl-1,2,3-thiadiazole, 2-thiocyanatomethylthiobenzothiazole, 1,4-dichloro-2,5-dimethoxybenzene, 4-(2-chlorophenylhydrazono)-3-methyl-5-isoxazolone, pyridine 2-thio-1-oxide, 8-hydroxyquinoline or its copper salt, 2,3-dihydro-5-carboxanilido-6-methyl-1,4-oxathiine, 2,3-dihydro-5-carboxanilido-6-methyl-1,4-oxathiine 4,4-dioxide, 2-methyl-5,6-dihydro-4H-pyran-3-carboxanilide, 2-methylfuran-3-carboxanilide, 2,5-dimethylfuran-3-carboxanilide, 2,4,5-trimethylfuran-3-carboxanilide, N-cyclohexyl-2,5-dimethylfuran-3-carboxamide, N-cyclohexyl-N-methoxy-2,5-dimethylfuran-3-carboxamide, 2-methylbenzanilide, 2-iodobenzanilide, N-formyl-N-morpholine 2,2,2-trichloroethyl acetal, piperazine-1,4-diyl-bis-1-(2,2,2-trichloroethyl)formamide, 1-(3,4-dichloroanilino)-1-formyl-amino-2,2,2-trichloroethane,2,6-dimethyl-N-tridecylmorpholine or its salts, 2,6-dimethyl-N-cyclododecylmorpholine or its salts, N-[3-(p-tert-butylphenyl)-2-methylpropyl]-cis- 2,6-dimethylmorpholine, N-[3-(p-tert-butylphenyl)-2-methylpropyl]piperidine, 1-[2-(2,4-dichlorophenyl)-4-ethyl-1,3-di-oxolan-2-yl-ethyl]-1H-1,2,4-triazole, 1-[2-(2,4-dichlorophenyl)-4-n-propyl-1,3-dioxolan-2-ylethyl]-1H-1,2,4-triazole, N-(n-propyl)-N-(2,4,6-trichlorophenoxyethyl)-N'-imidazolylurea, 1-(4-chlorophenoxy)-3,3-dimethyl-1-(1H-1,2,4-triazol-1-yl)-2-butanone, 1-(4-chlorophenoxy)-3,3-dimethyl-1-(1H-1,2,4-triazol-1-yl)-2-butanol, (2RS, 3RS)-1-[3-(2-chloro-phenyl)-2-(4-fluorophenyl)oxiran-2-ylmethyl]-1H-1,2,4-triazole,α-(2-chlorophenyl)-α-(4-chlorophenyl)-5-pyrimidine-methanol, 5-butyl-2-dimethylamino-4-hydroxy-6-methylpyrimidine, bis(p-chlorophenyl)-3-pyridinemethanol, 1,2-bis(3-ethoxycarbonyl-2-thioureido)benzene, 1,2-bis-(3-methoxycarbonyl-2-thioureido)benzene;
- strobilurins, such as methyl E-methoximino-[α-(o-tolyloxy)-o-tolyl]acetate, methyl E-2-{2-[6-(2-cyanophenoxy)-pyridimin-4-yloxy]-phenyl}-3-methoxyacrylate, methyl E-methoximino-[α-(2-phenoxyphenyl)]acetamide, methyl E-methoximino-[α-(2,5-dimethylphenoxy)-o-tolyl]acetamide;
- anilinopyrimidines, such as N-(4,6-dimethylpyrimidin-2-yl)aniline, N-[4-methyl-6-(1-propynyl)pyrimidin-2-yl]aniline, N-(4-methyl-6-cyclopropylpyrimidin-2-yl)aniline;
- phenylpyrroles, such as 4-(2,2-difluoro-1,3-benzodioxol-4-yl)pyrrole-3-carbonitrile;
- cinnamamides, such as 3-(4-chlorophenyl)-3-(3,4-dimethoxy-phenyl)acryloylmorpholide;
- and a variety of fungicides, such as dodecylguanidine acetate, 3-[3-(3,5-dimethyl-2-oxycyclohexyl)-2-hydroxyethyl]glutarimide, hexachlorobenzene, methyl N-(2,6-dimethylphenyl)-N- (2-furoyl)-DL-alaninate, DL-N-(2,6-dimethylphenyl)-N-(2'-methoxyacetyl)alanine methyl ester, N-(2,6-dimethylphenyl)-N-chloroacetyl-D,L-2-aminobutyrolactone, DL-N-(2,6-dimethylphenyl)-N-(phenylacetyl)alanine methyl ester, 5-methyl-5-vinyl-3-(3,5-dichlorophenyl)-2,4-dioxo-1,3-oxazolidine, 3-(3,5-dichlorophenyl)-5-methyl-5-methoxy-methyl-1,3-oxazolidine-2,4-dione, 3-(3,5-dichloro-phenyl)-1-isopropylcarbamoylhydantoin, N-(3,5-dichlorophenyl)-1,2-dimethylcyclopropane-1,2-dicarboximide, 2-cyano-[N-(ethylaminocarbonyl)-2-methoximino]acetamide, 1-[2-(2,4-dichlorophenyl)pentyl]-1H-1,2,4-triazole, 2,4-difluoro-α-(1H-1,2,4-triazolyl-1-methyl)benzohydryl alcohol, N-(3-chloro-2,6-dinitro-4-trifluoromethylphenyl)- 5-trifluoromethyl-3-chloro-2-aminopyridine, 1-((bis-(4- fluorophenyl)methylsilyl)methyl)-1H-1,2,4-triazole.

As examples of crops that might be modifild by plant growth promotion action, there are vegetables, nuts or fruits.

A further aspect of the present invention is, that mixtures of the amide compounds of the formula I with strobilurins are suitable in the method of plant growth promotion.

Suitable Strobilurins for these mixtures are for example azoxystrobin, dimoxystrobin, fluoxastrobin, kresoxim-methyl, metominostrobin, orysastrobin, picoxystrobin, pyraclostrobin or trifloxystrobin.

Amide compound I and strobilurin are preferably employed in a weight ratio in the range of from 20:1 to 1:20, in particular from 10:1 to 1:10.

The amide compounds of the formular I and the strobilurin may be applied simultaneously, that is either together or separately, or in succession.

As examples of crops that might be modified by plant growth regulating action, there are vegetables, nuts or fruits.

The precise amount of amide compound will depend upon the particular plant species being treated. This may be determined by the man skilled in the art with a few experiments and may vary in plant responses depending upon the total amount of compound used, as well as the particular plant species, which is being treated. Of course, the amount of amide compound should be non-phytotoxic with respect of the plant being treated.

Although the preferred method of application of the amide compounds used in the process of this invention is directly to the foliage and stems of plants, it as been deemed that such compounds may be applied to the soil in which the plants are growing, and that such compounds will be root-absorbed to a sufficient extent so as to result in plant responses in accordance with the teachings of this invention.

The following examples are illustrative of methods of plant growth regulation according to the invention, but should not be understood as limiting the said instant invention.

### EXAMPLE 1

Onions were transplanted in a 7 x 30 feet plot. 7 days after transplanting, onions were sprayed with product, BAS 516, containing 25,2% of boscalid. The spray contained also 12,8% of pyraclostrobin. BAS 516 was sprayed at a use rate of 0.45 lb. per acre of active ingredient. With a help of an adjuvant at 0.06% the onions were treated 5 times every 7 days after the first treatment. During this time plants were properly watered. 14 days after the last treatment, the crop yield was measured. The crop yield per acre increased by 4,2% compared to the untreated plot. In this trial, no fungal diseases were present.

### EXAMPLE 2:

Canola seeds were sown in a 56 square feet plot. 47 days after sowing, crop was sprayed with product containing 70% of boscalid. This treatment was at 35% of bloom. The canola was treated so as to have a dose of 0.26 lbs per acre of active ingredient. During the trial plants were properly watered. 58 days after the last treatment or 105 days after sowing the plants, the crop yield was measured. The crop yield per acre increased by 21 % compared to the untreated plot. In this trial limited fungal disease were present.

### EXAMPLE 3:

Example 2 was repeated except that product was applied at 50% bloom, which means 50 days after sowing. Same results were obtained but the increase of yield was 22% compared to the untreated plot.

### EXAMPLE 4:

8 year old Grapes stocks were treated on a 8 x 24 feet plot. Grapes were sprayed first when 6 inches of new vine has occurred with suspension emulsion of a product, BAS 516, containing 25,2% of boscalid. The spray contained also 12,8% of pyraclostrobin. BAS 516 was sprayed at a use rate of 0.2 lb. per acre of active ingredient every 14 days. These sprays were rotated by treatments with a 80% suspension which contains 3 lbs per acre of active ingredient in a 14 days interval starting 7 days after the first BAS 516 application. After the 7th treatment with BAS 516 grapes stayed for 88 days on the vines. 182 days after the first treatment the grapes size and weight were evaluated. The results were observed from the grapes emergence through to harvest. Limited diseases pressure was present in this trial. A 11,8 times higher yield was observed with following plant growth regulating effect: bigger berries, increased weight cluster, greener plants and higher plants.

The invention has been described in terms of various preferred embodiments. It is intended that the scope of the present invention be limited solely by the scope of the following claims.

## Claims

1. A method for treating plants in need of growth promotion, comprising applying to said plants, to the seeds from which they grow or to the locus in which they grow, a non-phytotoxic, effective plant growth promoting amount of an amide compound having the formula lb 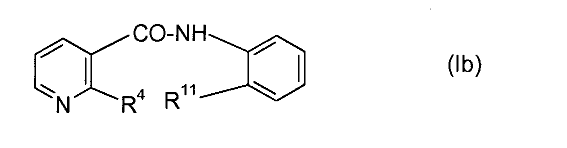 in which
R⁴ is halogen and
R¹¹ is phenyl which is substituted by halogen;
wherein the plant growth promoting amount of the amide compound of formula (Ib) applied is sufficient to provide at least one plant growth promoting effect selected from the group consisting of:
a) bigger fruit size
b) bigger vegetable size
c) higher sugar concentration of fruits
d) more developed root system
e) higher crop firmness
f) longer storability
g) improved appearance
h) better fruit finish
i) earlier fruit maturation
j) increase in plant height
k) bigger leaf blade
l) less dead basal leaves
m) greener leaf color
n) earlier flowering
o) increased shoot growth
p) improved plant vigour
q) early germination.

2. A method according to claim 1, which comprises as amide compound a compound of the formulae below:

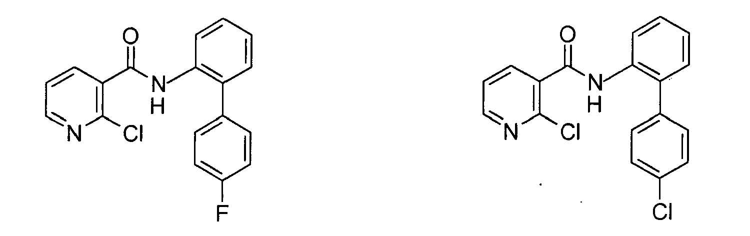

3. A method according to claim 1, wherein the amide compound of formula (lb) is 2-chloro-N-(4-chlorobiphenyl-2-yl)nicotinamide.

4. A method according to claim 1, wherein the amide compound of formula (Ib) is applied to said plants or the locus in which they grow in the form of granules at an application rate of from about 0.005 kg/ha to about 0.5 kg/ha of compound of formula (lb).

5. A method according to claim 4, wherein the application rate is from about 0.01 kg/ha to about 0.2 kg/ha of compound of formula (lb).

6. A method according to claim 1, wherein the plants being selected from the group consisting of rice, corn, cereal and vegetable plants and turf.

7. A method according to claim 1, wherein a mixture of the amide compound of formula lb with a strobilurin is used.

8. A method according to claim 7, wherein the strobilurin is selected from the group consisting of azoxystrobin, dimoxystrobin, fluoxastrobin, kresoxim-methyl, metominostrobin, orysastrobin, picoxystrobin, pyraclostrobin or trifloxystrobin.

9. A method according to claim 7, wherein a mixture of boscalid with pyraclostrobin is used.

10. A method according to claim 7, wherein the ratio between the amide compound lb and the strobilurin is from 20:1 to 1:20.

11. A method according to claim 7, wherein the amide compound and the strobilurin are applied simultaneously, that is either together or separately, or in succession.

## Patentansprüche

1. Verfahren zur Behandlung von Pflanzen, die eine Wachstumsförderung benötigen, umfassend das Aufbringen auf die Pflanzen, die Samen, aus denen sie wachsen, oder den Ort, an dem sie wachsen, eine nicht phytotoxische, das Pflanzenwachstum wirksam fördernde Menge einer Amidverbindung der Formel Ib 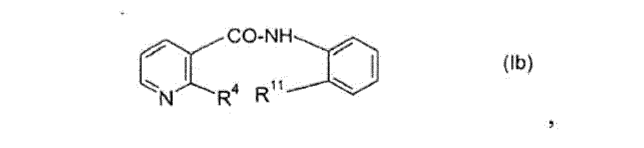 wobei
R⁴ für Halogen steht und
R¹¹ für Phenyl steht, das mit Halogen substituiert ist; wobei die das Pflanzenwachstum fördernde Menge der Amidverbindung der
Formel (Ib) ausreichend ist, um mindestens eine das Pflanzenwachstum fördernde Wirkung bereitzustellen, die aus der Gruppe ausgewählt wird, die aus Folgendem besteht:
a) größere Früchte
b) größere Gemüse
c) höhere Zuckerkonzentration von Früchten
d) stärker entwickeltes Wurzelsystem
e) größere Festigkeit der Feldfrüchte
f) längere Haltbarkeitsdauer
g) besseres Aussehen
h) besserer Fruchtnachgeschmack
i) frühere Fruchtreife
j) Zunahme der Pflanzenhöhe
k) größere Blattspreite
l) weniger tote Basalblätter
m) grünere Blattfarbe
n) frühere Blüte
o) verstärktes Sprosswachstum
p) verbesserte Pflanzenvitalität
q) frühe Keimung.

2. Verfahren nach Anspruch 1, das als Amidverbindung eine Verbindung der nachstehenden Formeln umfasst:

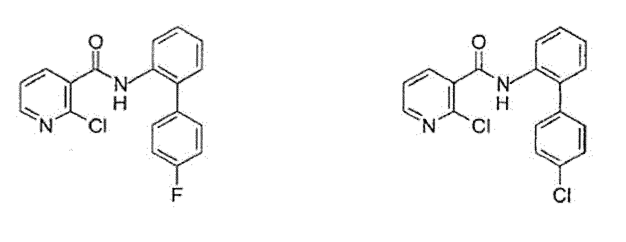

3. Verfahren nach Anspruch 1, wobei die Amidverbindung der Formel (Ib) 2-Chlor-N-(4-chlorbiphenyl-2-yl)-nicotinamid ist.

4. Verfahren nach Anspruch 1, wobei die Amidverbindung der Formel (Ib) auf die Pflanzen oder den Ort, an dem sie wachsen, in Form von Granulaten in einer Aufwandmenge von etwa 0,005 kg/ha bis etwa 0,5 kg/ha an Verbindung der Formel (Ib) aufgebracht wird.

5. Verfahren nach Anspruch 4, wobei die Aufwandmenge etwa 0,01 kg/ha bis etwa 0,2 kg/ha an Verbindung der Formel (Ib) beträgt.

6. Verfahren nach Anspruch 1, wobei die Pflanze aus der Gruppe ausgewählt werden, die aus Reis, Mais, Getreide und Gemüsepflanzen und Gras besteht.

7. Verfahren nach Anspruch 1, wobei ein Gemisch aus der Amidverbindung der Formel Ib mit einem Strobiturin verwendet wird.

8. Verfahren nach Anspruch 7, wobei das Strobilurin aus der Gruppe ausgewählt wird, die aus Azoxystrobin, Dimoxystrobin, Fluoxastrobin, Kresoxim-Methyl, Metominostrobin, Orysastrobin, Picoxystrobin, Pyraclostrobin oder Trifloxysbobin besteht.

9. Verfahren nach Anspruch 7, wobei ein Gemisch aus Boscalid mit Pyraclostrobin verwendet wind.

10. Verfahren nach Anspruch 7, wobei das Verhältnis zwischen der Amidverbindung Ib und dem Strobilurin 20:1 bis 1:20 beträgt.

11. Verfahren nach Anspruch 7, wobei die Amidverbindung und das Strobilurin gleichzeitig, also entweder zusammen oder getrennt, oder aufeinander folgend appliziert werden.

## Revendications

1. Méthode de traitement de plantes dont la croissance a besoin d'être favorisée, comprenant l'application auxdites plantes, aux semences à partir desquelles elles se développent, ou au lieu où elles se développent, d'une quantité efficace et non phytotoxique, favorisant la croissance végétale, d'un composé d'amide répondant à la formule Ib 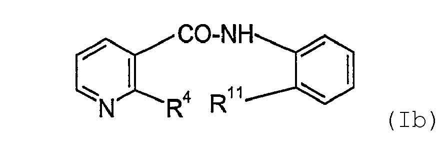 dans laquelle
R⁴ est halogène et
R¹¹ est phényle qui est substitué par halogène ;
dans laquelle la quantité favorisant la croissance végétale du composé d'amide de formule (Ib) appliquée est suffisante pour fournir au moins un effet favorisant la croissance végétale choisi dans le groupe constitué par :
a) une taille de fruits plus importante,
b) une taille de légumes plus importante,
c) une concentration en sucres supérieure dans les fruits,
d) un système racinaire plus développé,
e) une fermeté plus grande des récoltes,
f) une plus longue aptitude au stockage,
g) un aspect amélioré,
h) un meilleur état de la surface des fruits,
i) une maturation plus précoce des fruits,
j) une augmentation de la taille des plantes,
k) des limbes plus grands,
l) moins de mortalité des feuilles basales,
m) des feuilles plus vertes,
n) une floraison plus précoce,
o) une croissance accrue des pousses,
p) une amélioration de la vigueur végétale,
q) une germination plus précoce.

2. Méthode selon la revendication 1, comprenant comme composé d'amide un composé répondant aux formules ci-après :

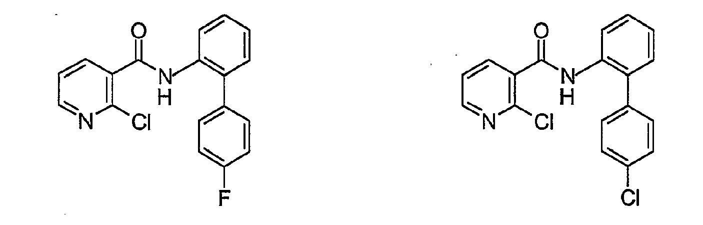

3. Méthode selon la revendication 1, dans laquelle le composé d'amide de formule (Ib) est le 2-chloro-N-(4-chlorobiphényl-2-yl)nicotinamide.

4. Méthode selon la revendication 1, dans laquelle le composé d'amide de formule (Ib) est appliqué auxdites plantes ou au lieu où elles se développent, sous la forme de granulés à un taux d'application allant d'environ 0,005 kg/ha à environ 0,5 kg/ha de composé de formule (Ib).

5. Méthode selon la revendication 4, dans laquelle le taux d'application va d'environ 0,01 kg/ha à environ 0,2 kg/ha de composé de formule (Ib).

6. Méthode selon la revendication 1, dans laquelle les plantes sont choisies dans le groupe constitué par le riz, le maïs, les céréales et les légumes, et le gazon.

7. Méthode selon la revendication 1, dans laquelle on utilise un mélange du composé d'amide de formule Ib avec une strobilurine.

8. Méthode selon la revendication 7, dans laquelle la strobilurine est choisie dans le groupe constitué par l'azoxystrobine, la dimoxystrobine, la fluoxastrobine, le krésoxime-méthyle, la métominostrobine, l'orysastrobine, la picoxystrobine, la pyraclostrobine ou la trifloxystrobine.

9. Méthode selon la revendication 7, dans laquelle on utilise un mélange de boscalide et de pyraclostrobine.

10. Méthode selon la revendication 7, dans laquelle le rapport entre le composé d'amide Ib et la strobilurine va de 20:1 à 1:20.

11. Méthode selon la revendication 7, dans laquelle le composé d'amide et la strobilurine sont appliqués simultanément, c'est-à-dire ensemble ou bien séparément, ou en succession.
